# EUROPEAN PATENT SPECIFICATION

(11) **EP 1 340 833 B1**
(45) Date of publication and mention of the grant of the patent: **29.09.2010**
(21) Application number: 03250844.2
(22) Date of filing: 11.02.2003
(51) Int. Cl.: C23C 4/10, C23C 4/02, C23C 28/04, F01D 5/28

(54) **Hybrid thermal barrier coating and method of making the same**
Hybride Wärmedämmschicht und Verfahren zu deren Herstellung
Revêtement hybride formant barrière thermique et méthode pour sa fabrication

(30) Priority: 11.02.2002 US 73813
(43) Date of publication of application: 03.09.2003
(73) Proprietor: United Technologies Corporation, Hartford, CT 06101 (US)
(72) Inventor: Gupta, Dinesh, S Windsor, CT 06074 (US); Lambert, David L., Clinton, CT 06413 (US); Trubelja, Mladen F., Manchester, CT 06040 (US); Maloney, Michael J., Marlborough, CT 06447 (US); Ulion, Nicholas E., Marlborough, CT 06447 (US); Litton, David A., Rocky Hill, CT 06067 (US)
(74) Representative: Taylor, Adam David

(56) References cited:
- EP-A- 0 783 043
- DE-A- 10 008 861
- US-A- 5 350 599
- US-A- 5 740 515
- US-A- 6 060 177
- US-B1- 6 258 467
- US-B1- 6 284 323

## Description

The present invention relates generally to metallic articles protected by thermal barrier coatings, such as gas turbine components, and more particularly to such articles with thermal barrier coatings incorporating ceramic layers.

Gas turbines are well developed mechanisms for converting chemical potential energy, in the form of fuel, to thermal energy and then to mechanical energy for use in propelling aircraft, generating electric power, pumping fluids etc. At this time, metallic materials are used in gas turbines very near or at the upper limits of their thermal stability. In the hottest portion of modern gas turbine engines, metallic materials are used at gas temperatures significantly above their melting points. They survive because they are air cooled. However, providing air cooling reduces efficiency.

Accordingly, there has been extensive development of coatings including thermal barrier coatings for use with cooled gas turbine hardware. By using a coating and particularly a thermal barrier coating, the amount of cooling air required can be substantially reduced, thus providing a corresponding increase in efficiency.

Such coatings are invariably based on ceramic. Mullite, alumina, etc. have been proposed, but zirconia is the current material of choice, although hafnia and other materials are being proposed. Zirconia is provided with a stabilizer, generally enough stabilizer to prevent the formation of the monoclinic phase, and typical stabilizers include yttria, calcia, ceria, magnesia and gadolinia.

Generally speaking, metallic materials have coefficients of thermal expansion which exceed those of ceramic materials, the relative differences depending in part upon the method by which the ceramics are applied. Consequently, one of the problems that must be addressed in the development of successful thermal barrier coatings is to match the coefficient of thermal expansion of the ceramic material or materials to the metallic substrate so that upon heating, when the substrate expands, the ceramic coating materials do not crack. Zirconia has a high coefficient of thermal expansion and this is a primary reason for the success of zirconia as a thermal barrier material on metallic substrates. Coating durability is also important. In addition, there are obviously the normal desires for long life, stability, economy etc.

Thermal barrier coatings have been deposited by several techniques including thermal spraying (plasma, flame and HVOF), sputtering and electron beam physical vapor deposition (EBPVD). Of these techniques, electron beam physical vapor deposition is currently a preferred technique for demanding high temperature applications because it produces a unique coating structure. Electron beam physical vapor deposited ceramic materials, when applied according to certain parameters, have a columnar grain microstructure consisting of small columns separated by gaps which extend into the coating. These gaps allow substantial substrate expansion without coating cracking and/or spalling. See, e.g., commonly owned U.S. Pat. No. 4,321,311. According to U.S. Pat. No. 5,073,433 and commonly-owned U.S. Pat. No. 5,705,231, a similar structure although typically on a larger scale, can be obtained by plasma spray techniques, although it is generally accepted that plasma spray materials are less suitable for the higher temperature and stress applications, particularly in the case of rotating components.

The columnar microstructure of physical vapor deposited TBCs gives rise to improved strain tolerance relative to plasma-sprayed TBCs. Furthermore, PVD processes with relatively high deposition rates, such as EB-PVD, result in wider inter-columnar pores, and thus improved strain tolerance. However, the intercolumnar pores yield a structure that also provides less thermal insulation than the same materials applied by thermal spray.

An article published by Teixeira, et al., [Journal of Thermal Spray Technology, vol. 9, no. 2, 2000, pp. 191-197] describes a ceramic duplex thermal barrier designed to improve oxidation and corrosion resistance of an underlying metallic substrate at high temperature. Teixeira suggests that one cause of TBC failure is oxide scale growth in a stress free environment. The TBC consists of a very thin (7 micrometers, ∼0.28 mil), relatively dense, columnar ceramic layer deposited by sputtering directly onto a chromia forming, nickel-based superalloy, and a thick (300 micrometer, ∼12 mil) thermal sprayed ceramic topcoat on the thin columnar layer. The thin columnar ceramic layer replaced the "traditional" metallic bond coat. e.g., MCrAlY. The thin, dense sputtered layer serves as a diffusion barrier to reduce the oxidation and corrosion of the superalloy substrate. The much lower deposition rates of sputtering relative to EB-PVD results in coatings with substantially less inter-columnar porosity that are more suitable for use as diffusion barriers. However, these dense sputtered coatings are less strain-tolerant than coatings deposited by high-rate processes such as EB-PVD.

It would be desirable to provide a ceramic coating which combines the benefits of strain tolerance of a columnar grain ceramic coating with the reduced thermal conductivity of a thermal sprayed ceramic coating. The present invention is directed to such a coating.

Although the present coating was developed for application in gas turbines, e.g., for aerospace and industrial applications, the invention has utility in other applications where high temperatures, erosion-promoting and/or corrosive environments are encountered, such as furnaces and internal combustion engines. US-6258467-B1 discloses an article as in the preamble to claim 1.

The present invention provides a superalloy article as claimed in claim 1.

The article includes a superalloy substrate, an adherent alumina layer on the substrate, and a ceramic, thermally insulating layer on the alumina layer. The ceramic layer includes a relatively thin and more strain tolerant columnar grain ceramic layer, on the alumina layer, and a relatively thick and more thermally insulating thermal sprayed ceramic layer, on the columnar grain ceramic. The alumina layer may be formed using a conventional overlay or aluminide bond coat, or the superalloy material may be capable of forming an alumina layer.

Certain preferred embodiments will now be described in greater detail by way of example only and with reference to the accompanying drawings, in which:
FIG. 1 is a photomicrograph of a preferred coating in accordance with the present invention;
FIG. 2 is a graph illustrating the relative durability of the preferred coating of the present invention; and
FIG. 3 is a graph illustrating the improved thermal insulating capability of the present invention.

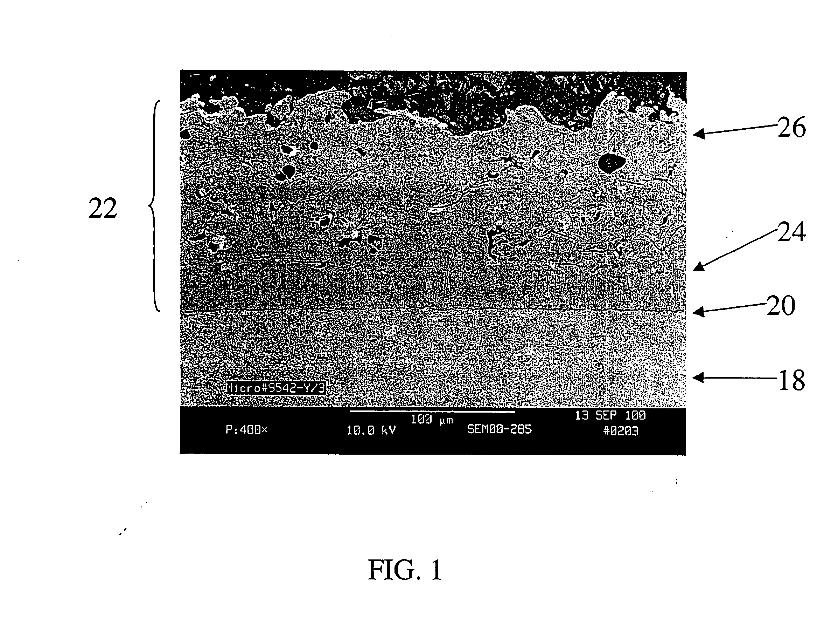

Turning now to FIG. 1, there is shown a preferred thermal barrier coating in accordance with the present invention. The present invention is described in the context of a turbine blade, however those skilled in the art will recognize that numerous other components and assemblies of gas turbines can be coated with the coating of the present invention, including but not limited to vanes, combustors, cases, seals, rings and associated support hardware, as well as land based turbines and components for use in applications other than gas turbines which can be utilized with the present invention.

A typical blade has an airfoil portion 12, a platform portion 14 and a root portion 16, as is known in the art. Typically, those portions of a component exposed to hot gasses, e.g., the airfoil portion and adjacent portion of the platform are coated with a thermal barrier coating, although the present invention is not intended to be limited to application on any particular area. With reference to FIG. 1, an article incorporating the present invention includes a substrate 18, an adherent oxide layer 20 and a two part ceramic coating 22 including a relatively strain tolerant layer 24 and a relatively more thermally insulating layer 26.

The invention materials and coatings are typically used to protect a metallic substrate. In the case of gas turbines, such substrates typically include one or more portions composed of a superalloy. Superalloys are metals, usually based on iron, nickel or cobalt and containing chromium and aluminum and usually including titanium and refractory metals, and having useful properties above 1200°F (650°C). In the context of gas turbines, such materials are typically cast, and may be equiaxed, or directionally solidified, including polycrystalline and single crystal articles. Table I provides a non-exhaustive list of exemplary substrate materials.

**TABLE I**

| (wt % - Exemplary Superalloy Compositions) | | | | | | | | | | | | | | |
|---|---|---|---|---|---|---|---|---|---|---|---|---|---|---|
| | Cr | Co | W | Cb | Ti | Al | B | Hf | C | Ni | Ta | M o | Zr | Re |
| PWA647 | 23 | Bal. | 7 | - | .2 | | - | - | - | 10 | 3.5 | - | .5 | - |
| PWA1422 | 9 | 10 | 12 | 1 | 2 | 5 | 0.015 | 1.6 | .14 | Bal | - | - | - | - |
| PWA1426 | 6.4 | 12.6 | 6.4 | - | - | 5.9 | 0.012 | 1.5 | - | Bal | 3.0 | 1.7 | .08 | .3 |
| PWA1480 | 10 | 5 | 4 | - | 1.5 | 5 | - | - | - | Bal | 12 | - | - | - |
| PWA1483 | 12 | 9 | 3.8 | - | 4.1 | 3.6 | - | - | - | Bal | 5 | 1.9 | - | - |
| PWA1484 | 5 | 10 | 5.9 | - | - | 5.6 | - | 0.1 | - | Bal | 8.7 | 1.9 | - | 3.0 |
| PWA1487 | 5 | 10 | 5.9 | - | - | 5.6 | - | .35 | - | Bal | 8.4 | 1.9 | - | 3.0 |
| IN 792 | 12 | 9 | 3.8 | - | 4.1 | 3.5 | 0.015 | 0.5 | .12 | Bal | 3.9 | 1.9 | .12 | - |
| DSR'80H | 14 | 9.5 | 4 | - | 4.8 | 3 | - | .75 | - | Bal | - | 4 | - | - |
| CM247LC | 8.1 | 9.2 | 9.5 | - | 0.7 | 5.6 | - | 1.4 | - | Bal | 3.2 | 0.5 | - | - |
| Rene N5 | 7 | 7.5 | 5 | - | - | 6.2 | - | .15 | - | Bal | 6.5 | 1.5 | - | - |
| CMSX-4 | 6.5 | 9 | 6 | - | 1 | 5.6 | - | .1 | - | Bal | 6.5 | 0.6 | - | - |

See, e.g., U.S. Pat. Nos. 4,209,348; 4,719,080; 5,068,084; 5,599,355 and 6,270,318.

Substrates composed of other materials, including steels, copper alloys and titanium alloys, and which need protection from high temperature operating environments may also be protected.

To date successful applications of ceramic coatings to superalloys have included an oxide layer between the bond coat or substrate, and the ceramic coating, whether the oxide layer is formed before, during or less typically after ceramic application. It is known from prior thermal barrier coatings that a metallic bond coat (sometimes described as an overlay coating) such as an MCrAlY type coating is a good bond coat for ceramic coatings - with M being Fe, Ni, Co and/or combinations of these elements. Aluminide bond coats are also known.

A broad composition range for MCrAlY coatings includes, by weight, 10 - 25% Cr, 5 - 15 Al, 0.1 - 1.0 Y or other suitable element, balance selected from Fe, Ni, and Co and mixtures of Ni and Co. Additions of up to (or even exceeding) 5% each of Hf, Ta or Re, up to 1% of Si and up to 3% each of Os, Pt, Pd, Rh and/or other precious metals are also possible. Table II provides an exemplary and non-limiting list of MCrAlYs that can be applied by suitable methods such as thermal spray processes, by EB-PVD processes, and by electroplating.

**TABLE II**

| (wt % - Exemplary MCrAlY Compositions) | | | | | | | |
|---|---|---|---|---|---|---|---|
| | Ni | Co | Cr | Al | Y | Hf | Si |
| NiCrAlY | Bal | - | 19.5 | 12.5 | .45 | - | - |
| CoCrAlY | - | Bal | 18 | 11 | .45 | - | - |
| NiCoCrAlY | Bal | 23 | 18 | 12.5 | .3 | - | - |
| NiCoCrAlY | Bal | 22 | 17 | 12.5 | .6 | .25 | .4 |

See, e.g., U.S. Pat. Nos. 3,928,026; 4,585,481; 5,277,936 and Re. 32,121.

An alternate bond coat is an aluminide, typically formed by diffusing aluminum into the substrate surface. Diffusion aluminides are well known and may be applied using a powder mixture (termed a pack) containing an aluminum source, such as an aluminum alloy or compound, an activator (usually a halide compound, such as NaF although other halides and other materials may be used as activators) and an inert material such as alumina. The part to be coated is buried in the pack and heated to 1500 - 2000°F (815-1093°C) while a carrier gas, such as hydrogen, is flowed through the pack. Alternative pack processes, during which the part is not buried in the pack, are also known, as are other ways of depositing aluminum onto a substrate surface (plating, vapor deposition) followed by diffusing the aluminum into the substrate. The incorporation of one or more precious metals such as Pt, Rh, Pd and Os into aluminide coatings likewise is known. See, e.g., U.S. Pat. No. 5,514,482 for a description of aluminide coating processes.

Combinations of overlay and aluminide coatings are also possible. See, e.g., commonly owned U.S. Pat. No. 4,897,315 for a description of a system having an inner MCrAlY overlay coating and an outer aluminide coating. See, commonly owned U.S. Pat. No. 4,005,989 for a description of the reverse combination, an inner aluminide coating and an outer overlay coating.

The common feature of these bond coats and bond coat combinations is that they form an adherent oxide layer, e.g., alumina, on their outer surface. The inventive thermal barrier coating has relatively limited solubility in, but bonds firmly to, alumina.

In certain cases, superalloys may form sufficiently perfect and adherent alumina layers to which the ceramics may adhere without a separate bond coat. See, e.g., commonly owned U.S. Pat. Nos. 4,209,348; 4,719,080; 4,895,201; 5,034,284; 5,262,245; 5,538,796 and 5,346,563. The article of FIG. 1 illustrates the present invention employed with such a substrate material.

The thermally insulating ceramic (22, FIG. 1) is applied, either onto the substrate surface, to the overlay layer or aluminide layer, or onto the alumina layer, depending upon which of the above described oxide-forming systems are employed. As noted above, the ceramic is applied in two (or more) parts, with the first part comprising a relatively more strain tolerant ceramic and the second part comprising a relatively more thermally insulating ceramic.

The first, more strain tolerant ceramic and second, more thermally insulating ceramic are applied at first and second thicknesses respectively, and thus result in a given ratio of thicknesses. While the preferred coating thicknesses and ratio of thicknesses will depend upon the intended application and desired thermal insulating capability of an article in accordance with the present invention, we generally prefer the thickness of the first ceramic to between about 0.25 - 10 mils (6.4 - 250 µm) or more, more specifically between about 0.5 - 5 mils (12.7 - 130 µm) and still more specifically between about 1 - 3 mils (25 - 76 µm), with the second ceramic having a thickness between about 1 - 50 mils (25 µm - 1.25 mm), more specifically between about 3 - 20 mils (76 µm - 0.5 mm), and still more specifically between about 3 - 10 mils (76 µm - 0.25 mm). The thickness of the first ceramic is between about 20-40% of the overall thickness of the insulating ceramic.

With respect to the first, relatively more strain tolerant layer, we use a columnar grain ceramic layer, e.g., of a type known in the art, which is readily produced by electron beam physical vapor deposition and provides good strain tolerance. Other columnar structures may be produced by plasma spray techniques, as set forth for example in U.S. Pat. Nos. 5,520,516 to Taylor and 5,705,231 to Nissley. The relatively strain tolerant layer should be thick enough to provide sufficient compliance given the temperature ranges to be encountered during use, e.g., from ambient temperature to maximum operating temperature, yet preferably no thicker than necessary to accomplish this purpose, particularly where the weight of the coating is to be minimized, e.g., rotating components. For turbine blades, the columnar grain layer should be applied to a thickness of at least about 0.25 mils (6.4 µm), and we prefer a layer at least about 0.5 mils (12.7 µm) and more preferably at least about 1.0 mils (25 µm) thick.

FIG. 1 illustrates a columnar grain ceramic comprising yttria and zirconia with about 7 wt. % yttria. One such suitable material is shown for example in commonly-owned U.S. Pat. No. 4,321,311 to Strangman et al, and may be applied by a physical vapor deposition method, such as by EB-PVD. Other materials, including gadolinia zirconia, see, e.g., commonly owned U.S. Pat. No. 6,177,200 and materials having different crystal structures, e.g., commonly owned U.S. Pat. No. 6,117,560 both to Maloney, may also be employed.

The second ceramic provides relatively enhanced thermal insulation capability. While we prefer to apply the material by thermal spray processes such as air plasma spray and low pressure plasma spray, other known processes may also be employed. Where applied by thermal spray, the second ceramic has a microstructure which typically appears as splats built upon one another, and provides significantly lower thermal conductivity compared to corresponding material applied by EB-PVD to form columnar grains. For turbine blades, the second ceramic may be applied to a thickness of at least 1 mil (25 µm) up to about 100 mils (2.5 mm) or more, more preferably about 2 - 50 mils (50 µm - 1.25 mm) and still more preferably about 3 - 10 mils (76 µm - 0.25 mm), although those skilled in the art will recognize that the desired thickness will depend upon the application of the component. For example, thermal barrier coatings on stationary components such as combustor liners, turbine vanes and the like may be thicker that coatings on rotating components such as turbine blades and the like. The overall thickness will depend upon considerations such as the overall temperature reduction desired for the part and the like.

Samples with the columnar TBC layer were prepared by electron beam physical vapor deposition. Specimens with nominal columnar layer TBC thicknesses of 1 mil (25 µm) and 2.5 mils (64 µm) and composed of yttria stabilized zirconia and gadolinia stabilized zirconia were prepared. The ceramic oxides were evaporated utilizing an electron beam vacuum vapor deposition coating system, employing parameters typical for zirconia based TBCs.

A ceramic top coat layer was then applied by an air plasma spray (APS) process. While other plasma guns can be employed with equal effect, a Plasma Technic F-4 spray torch with standard gun components was used to apply the top coat layer. Spray parameters varied slightly depending on the type of specimen being coated. Generally, the coating was applied using an amperage of 500 - 600 amps, a voltage of 55 - 65 volts, an argon primary gas flow of 35 - 45 standard liters per minute (SLPM), a secondary gas hydrogen flow of 2 -10 SLPM, a powder feed rate of 40-55 grams per minute, and a gun-to-workpiece distance of about 6 inches (150 mm).

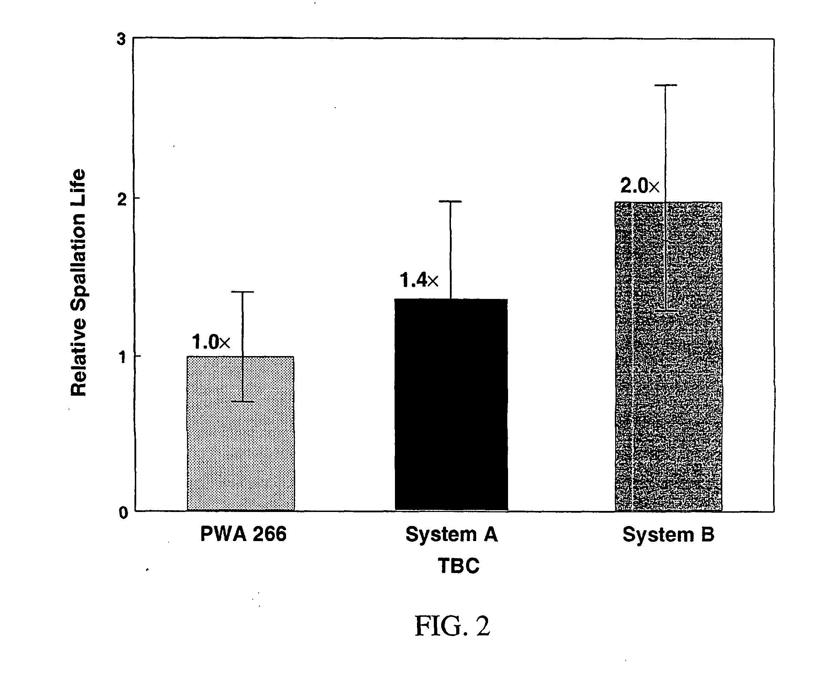

Two hybrid TBC systems (FIG. 2, labeled as "A" and "B") were prepared according to the present invention and burner-rig tested so as to determine their cyclic spallation life. The test-cycle included heating the parts to about 2075°F (1135°C) for 4 minutes followed by forced air cooling for 2 minutes. The two systems differed in the thickness ratio between the strain-tolerant ceramic layer and the thermally insulating ceramic layer. For the systems A and B, the ratios were about 1:4 and 1:1, respectively. The cyclic spallation life for the hybrid TBC systems was benchmarked relative to a TBC of the above described U.S. Pat. No. 4,321,311 to Strangman, whose favorable cyclic spallation performance is well known to those skilled in the art. The overall ceramic thickness for all investigated TBC systems was equal, about 5 mils (125 µm).

We determined that the cyclic spallation life of the hybrid TBC systems was dependent, at least in part, upon the thickness ratio of the strain-tolerant ceramic layer relative to the thermally insulating ceramic layer. Furthermore, the cyclic spallation life of the two investigated hybrid TBC systems was 1.4 times and 2.0 times superior to that of the above mentioned prior art TBC system, for the thickness ratios of 1:4 and 1:1, respectively. This result is attributed to improved interlocking of the thermally insulating ceramic layer to the underlying strain-tolerant ceramic layer, since the column width near the tips of the EB-PVD layer tends to increase at least somewhat as the thickness of the strain-tolerant layer increases. While the 1:1 (first more strain tolerant layer to second, more thermally insulating layer) thickness ratio demonstrated a longer cyclic spallation life, for the given overall thickness, the coating with a 1:4 thickness ratio provided greater thermal insulation than the coating with a 1:1 thickness ratio.

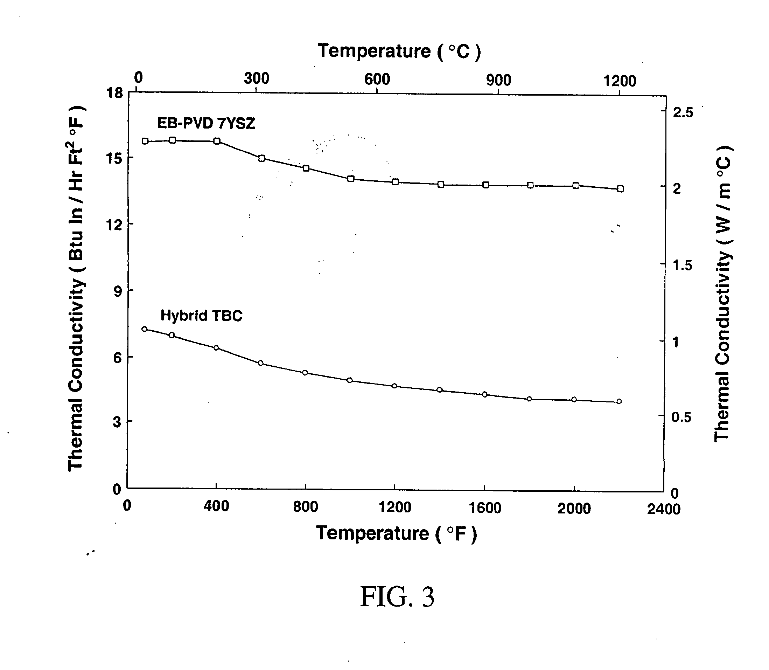

Thermal conductivity benefit for a hybrid TBC system is estimated in FIG. 3 using the "rule of mixtures", the thermal conductivity for a layer of EB-PVD ceramic and a layer of plasma spray ceramic, in the case of FIG. 3 an EB-PVD layer of gadolinia zirconia prepared according to commonly-owned U.S. Pat. No. 6,177,200 to Maloney, and a plasma sprayed layer composed of yttria-ceria and applied by air plasma spray. In order to increase the benefit of the thermal sprayed ceramic relative to the columnar grain ceramic, the hybrid TBC system had the thickness ratio of the more strain-tolerant ceramic layer to the more thermally insulating ceramic layer of about 1:4. The thermal conductivity of the hybrid system is shown in relationship to the state of the art, strain tolerant 7YSZ ceramic prepared by electron-beam physical vapor deposition (EB-PVD). Again, the overall thickness of both TBC systems is the same. Referring again to FIG. 3, at temperatures relevant to applications in gas turbine engines, the hybrid TBC system provides a thermal conductivity value as low as 30% of that for the state of the art EB-PVD 7YSZ system, i.e., an up to 70% reduction.

The present invention, which offers a greater reduction in thermal conductivity for a given thickness relative to traditional columnar grain coatings, offers significant advantages over the prior art.

As an initial matter and again with reference to gas turbine applications, the present invention more readily enables the use of TBCs incorporating plasma spray ceramics more effectively, including use on rotating components, in high temperature operation.

Moreover, given a constant TBC thickness and gas temperature, component temperatures are lowered thereby extending component life. Given a constant coating thickness and metal temperature, higher gas temperatures are possible thereby improving efficiency. Given a constant gas temperature and constant metal temperature, thinner coatings may be utilized, which greatly reduces the pull exerted by a rotating blade and enables use of smaller, lighter disks, shafts, bearings, etc. and/or increases creep life. Moreover, thinner coatings are expected to be more durable than thicker coatings, to the extent that thermal stresses in the thicker coatings are believed to contribute to TBC failure. Variations and combinations of the above, e.g., application of a somewhat thinner TBC and operation at a somewhat higher gas temperature, may also be desirable. In addition, it may be desirable to apply another layer over the thermal spray layer, e.g., to provide additional erosion resistance, or provide an additional diffusion barrier, or the like.

Although this invention has been shown and described with respect to the detailed embodiments thereof, it will be understood by those skilled in the art that various changes in form and detail thereof may be made without departing from the scope of the invention as defined in the following claims.

## Claims

1. A superalloy article having a thermal barrier coating, comprising:
a superalloy substrate (18);
an alumina layer (20) on the substrate (18); and
a thermally insulating ceramic on the alumina layer, the ceramic layer (22) comprising:
a columnar grain ceramic (24) on the alumina layer; and
a thermal sprayed ceramic (26) on the columnar grain ceramic;
**characterised in that** the thermally insulating ceramic layer (22) has an overall thickness, and the thickness of the columnar grain layer (24) is 20-40 % of the overall thickness.

2. The article of claim 1, wherein the alumina layer (20) is provided by an MCrAlY coating, wherein M comprises Fe, Ni, Co or mixtures thereof.

3. The article of claim 1, wherein the alumina forming layer (20) is an aluminide.

4. The article of claim 1, wherein the substrate (18) is composed of a superalloy material capable of forming an adherent alumina layer (20).

5. The article of any preceding claim, wherein the columnar grain ceramic (24) is a stabilized zirconia.

6. The article of claim 1, wherein the columnar grain ceramic (24) has a thickness of between 0.25 - 10 mils (6.4 - 250 µm).

7. The article of any preceding claim, wherein the columnar grain ceramic (24) has a thickness of at least 0.5 mils (12.7 µm).

8. The article of any preceding claim, wherein the thermal sprayed ceramic (26) is a stabilized zirconia.

9. The article of any of claims 1 to 7, wherein the thermal sprayed ceramic (26) has a composition different to the composition of the columnar grain ceramic (24).

10. The article of claim 1, wherein the thermal sprayed ceramic layer (26) has a thickness of between 1 - 100 mils (25 µm - 2.5 mm).

11. The article of claim 10, wherein the thermal sprayed ceramic layer has a thickness of 2 - 50 mils (50 µm - 1.25 mm).

12. The article of any preceding claim, further comprising an additional coating on the thermal spray layer (26) which is more erosion resistant that the thermal spray layer.

13. The article of claim 1, wherein the columnar grain ceramic layer (24) has a thickness between 1 - 10 mils (25 µm - 0.25 mm).

14. The article of claim 13, wherein the thermal spray ceramic layer (26) has a thickness up to 25 times the columnar grain ceramic layer (24) thickness.

## Patentansprüche

1. Gegenstand aus Superlegierung mit einer Wärmebarrierebeschichtung, aufweisend:
ein Substrat (18) aus Superlegierung;
eine Aluminiumoxidschicht (20) auf dem Substrat (18); und
eine wärmeisolierende Keramikschicht auf der Aluminiumoxidschicht, wobei die Keramikschicht (22) aufweist:
eine Keramik (24) mit säulenartigen Körnern auf der Aluminiumoxidschicht; und
eine thermisch gespritzte Keramik (26) auf der Keramik mit säulenartigen Körnern;
**dadurch gekennzeichnet, dass** die wärmeisolierende Keramikschicht (22) eine Gesamtdicke hat, und dass die Dicke der Schicht (24) mit säulenartigen Körnern 20 bis 40 % der Gesamtdicke beträgt.

2. Gegenstand nach Anspruch 1, wobei die Aluminiumoxidschicht (20) durch eine MCrAIY-Beschichtung, worin M Fe, Ni, Co oder Gemische davon aufweist, bereitgestellt wird.

3. Gegenstand nach Anspruch 1, wobei die Aluminiumoxid bildende Schicht (20) ein Aluminid ist.

4. Gegenstand nach Anspruch 1, wobei das Substrat (18) aus einem Superlegierungsmaterial besteht, das in der Lage ist, eine anhaftende Aluminiumoxidschicht (20) zu bilden.

5. Gegenstand nach einem vorangehenden Anspruch, wobei die Keramik (24) mit säulenartigen Körnern ein stabilisiertes Zirkoniumdioxid ist.

6. Gegenstand nach Anspruch 1, wobei die Keramik (24) mit säulenartigen Körnern eine Dicke von zwischen 0,25 bis 10 mil (6,4 bis 250 µm) hat.

7. Gegenstand nach einem vorangehenden Anspruch, wobei die Keramik (24) mit säulenartigen Körnern eine Dicke von mindestens 0,5 mil (12, 7 µm) hat.

8. Gegenstand nach einem vorangehenden Anspruch, wobei die thermisch gespritzte Keramik (26) ein stabilisiertes Zirkoniumdioxid ist.

9. Gegenstand nach einem der Ansprüche 1 bis 7, wobei die thermisch gespritzte Keramik (26) eine Zusammensetzung hat, die von der Zusammensetzung der Keramik (24) mit säulenartigen Körnern verschieden ist.

10. Gegenstand nach Anspruch 1, wobei die thermisch gespritzte Keramikschicht (26) eine Dicke von zwischen 1 bis 100 mil (25 µm bis 2,5 mm) hat.

11. Gegenstand nach Anspruch 10, wobei die thermisch gespritzte Keramikschicht eine Dicke von 2 bis 50 mil (50 µm bis 1,25 mm) hat.

12. Gegenstand nach einem vorangehenden Anspruch, außerdem aufweisend eine zusätzliche Beschichtung auf der thermisch gespritzten Schicht (26), die erosionsbeständiger ist als die thermisch gespritzte Schicht.

13. Gegenstand nach Anspruch 1, wobei die Keramikschicht (24) mit säulenartigen Körnern eine Dicke zwischen 1 bis 10 mil (25 µm bis 0,25 mm) hat.

14. Gegenstand nach Anspruch 13, wobei die thermisch gespritzte Keramikschicht (26) eine Dicke von bis zum 25fachen der Dicke der Keramikschicht (24) mit säulenartigen Körnern hat.

## Revendications

1. Article en superalliage ayant un revêtement formant barrière thermique, comprenant :
un substrat en superalliage (18) ;
une couche d'alumine (20) sur le substrat (18) ; et
une céramique thermo-isolante sur la couche d'alumine, la couche de céramique (22) comprenant :
une céramique à grains en forme de colonne (24) sur la couche d'alumine ; et
une céramique pulvérisée thermique (26) sur la céramique à grains en forme de colonne ;
**caractérisé en ce que** la couche céramique thermo-isolante (22) présente une épaisseur globale, et l'épaisseur de la couche à grains en forme de colonne (24) est de 20 à 40 % de l'épaisseur globale.

2. Article selon la revendication 1, dans lequel la couche d'alumine (20) est fournie par un revêtement MCrAlY, où M comprend Fe, Ni, Co ou leurs mélanges.

3. Article selon la revendication 1, dans lequel la couche formant alumine (20) est un aluminure.

4. Article selon la revendication 1, dans lequel le substrat (18) est composé d'un matériau en superalliage capable de former une couche d'alumine adhérente (20).

5. Article selon l'une quelconque des revendications précédentes, dans lequel la céramique à grains en forme de colonne (24) est une zircone stabilisée.

6. Article selon la revendication 1, dans lequel la céramique à grains en forme de colonne (24) présente une épaisseur comprise entre 6,4 et 250 µm (0,25 et 10 mils).

7. Article selon l'une quelconque des revendications précédentes, dans lequel la céramique à grains en forme de colonne (24) présente une épaisseur d'au moins 12,7 µm (0,5 mil).

8. Article selon l'une quelconque des revendications précédentes, dans lequel la céramique pulvérisée thermique (26) est une zircone stabilisée.

9. Article selon l'une quelconque des revendications 1 à 7, dans lequel la céramique pulvérisée thermique (26) présente une composition différente de la composition de la céramique à grains en forme de colonne (24).

10. Article selon la revendication 1, dans lequel la couche de céramique pulvérisée thermique (26) présente une épaisseur comprise entre 25 µm et 2,5 mm (1 et 100 mils).

11. Article selon la revendication 10, dans lequel la couche en céramique pulvérisée thermique présente une épaisseur de 50 µm à 1,25 mm (2 à 50 mils).

12. Article selon l'une quelconque des revendications précédentes, comprenant en outre un revêtement additionnel sur la couche de pulvérisation thermique (26) qui est plus résistant à l'érosion que la couche de pulvérisation thermique.

13. Article selon la revendication 1, dans lequel la couche de céramique. à grains en forme de colonne (24) présente une épaisseur comprise entre 25 µm et 0,25 mm (1 et 10 mils).

14. Article selon la revendication 13, dans lequel la couche en céramique de pulvérisation thermique (26) présente une épaisseur allant jusqu'à 25 fois l'épaisseur de la couche en céramique à grains en forme de colonne (24).
